# EUROPÄISCHE PATENTSCHRIFT

(11) **EP 1 237 348 B1**
(45) Veröffentlichungstag und Bekanntmachung des Hinweises auf die Patenterteilung: **24.05.2006**
(21) Anmeldenummer: 02090021.3
(22) Anmeldetag: 17.01.2002
(51) Int. Cl.: H04M 3/22, H04M 7/00, H04L 12/64, H04L 12/66, H04L 29/06, H04Q 7/34, H04L 12/26

(54) **Verfahren und Anordnung zur Prüfung der Übertragungsqualität einer Sprachübertragung über ein IP-Netz**
Method and device to monitor the transmission quality of a voice signal over an IP network
Méthode et dispositif pour contrôlée la qualité de transmission d'un signal voix sur un réseaux IP

(30) Priorität: 15.02.2001 DE 10108856
(43) Veröffentlichungstag der Anmeldung: 04.09.2002
(73) Patentinhaber: SIEMENS AKTIENGESELLSCHAFT, 80333 München (DE)
(72) Erfinder: Zaencker, Olaf, 23843 Bad Oldesloe (DE)

(56) Entgegenhaltungen:
- "TIPHON Release 3; Technology Compliance Specification; Part 5: Quality of Service (QoS) measurement methodologies; ETSI TS 101 329-5" ETSI STANDARDS, EUROPEAN TELECOMMUNICATIONS STANDARDS INSTITUTE, SOPHIA-ANTIPO, FR, Bd. TIPHON-5, Nr. V111, November 2000 (2000-11), XP014006058 ISSN: 0000-0001
- "Telecommunications and Internet Protocol Harmonization Over Networks (TIPHON); End-to-End Quality of Service in TIPHON Systems; Part 3: Signalling and Control of end-to-end Quality of Service; ETSI TS 101 329-3" ETSI STANDARDS, EUROPEAN TELECOMMUNICATIONS STANDARDS INSTITUTE, SOPHIA-ANTIPO, FR, Bd. TIPHON-5, Nr. V111, Januar 2001 (2001-01), XP014006055 ISSN: 0000-0001

## Beschreibung

Die Erfindung betrifft ein Verfahren sowie eine Anordnung zur Prüfung der Sprach- bzw. Übertragungsqualität einer VoIP (Voice over IP)-Übertragung.

Die Sprachübertragung mittels IP-Protokoll in lokalen Netzen, z. B. in einem Voice over IP-System als Ergänzung zu oder Substitut für ein vorhandenes Kommunikationssystem (PBX) oder aber als Internet-Telefonie im Weitverkehrsbereich, ist derzeit noch wenig verbreitet, stellt aber für die Zukunft durchaus aussichtsreiches Kommunikationsverfahren dar. Sie ermöglicht in Kombination mit anderen IP-basierten Diensten neuartige, interessante Kommunikationsformen.

Im Interesse einer breiten Durchsetzung von VoIP ist jedoch noch eine Reihe von organisatorischen und auch technischen Problemen zu lösen.

Die Sprachübertragung über IP-Netze liefert - insbesondere in Netzwerken ohne QoS(Quality of Service)-Mechanismen auf Grund des komplexen Zusammenspiels von Netz, Kommunikationsprotokoll, Betriebssystem und Hardware keine konstante Sprachqualität. Als nächstliegenden Stand der Technik und ETSI TS 101 329-5 angesehen welches die allgeweisen Prinzipien der Quality of Service Messenger beschreibt. Es wird daher ein Verfahren für die Beurteilung der Sprachqualität benötigt, um diese zunächst zu protokollieren, (ggf. sogar zu signalisieren) und/oder in einem anschließenden Prozeß als Steuerinformation für adaptive/selbstoptimierende Systeme (Bandbreitensteuerung z. B. an Endpoints, alternative Routenwahl z. B. an Gateways, etc.) heranzuziehen.

Das Verfahren sollte dabei folgende Anforderungen erfüllen:
- Keine zusätzliche Belastung des Netzwerkes durch Testsignale
- Beurteilung der Qualität realer Sprachverbindungen, nicht der Qualität von Testsignalen
- Automatische Bestimmung der Qualität
- Echtzeitfähigkeit des Verfahrens (Bestimmung der Qualität während des Betriebes)
- Einfachheit des Verfahrens (keine aufwendigen Berechnungen; wenig Prozessorbelastung)
- Kontinuierliche Anwendbarkeit (laufende Generierung von Meßdaten)
- Flächendeckende Anwendbarkeit (jeder Endpoint soll berücksichtigt werden können)
- Transparenz für den Benutzer eines Voice over IP-Systems (keine Beeinträchtigung der Funktion)

Bisherige Lösungen zur Bestimmung der Sprachqualität lassen sich in etwa folgendermaßen klassifizieren:
a) Beurteilung von Netzwerk-Parametern (Round-Trip-Delay, etc.) ohne konkrete Bezugnahme auf die Besonderheiten der Echtzeitkommunikation; somit ungeeignet zur Bereitstellung hinreichender Informationen.
b) Application Layer Messungen (PSQM, etc.) bei denen am Sender ein spezielles Signal zur Übertragung über den zu untersuchenden Kanal eingespeist und mit dem am Empfänger erhaltenen Signal unter Zuhilfenahme komplexer mathematischer Modelle, u.a. zur Berücksichtigung der physiologischen Eigenschaften des menschlichen Ohres, verglichen wird. Hier wird zum einen zusätzliche Netzwerklast durch Test-Samples generiert, zum anderen konsumieren die Berechnungsalgorithmen einen nicht unerheblichen Teil der Prozessorleistung. Entsprechende Testausrüstungen sind zwar verfügbar, jedoch (nicht zuletzt wegen des hohen apparativen und finanziellen Aufwandes) nur für Einzelmessungen einsetzbar.
c) Versuchsreihen unter Beteiligung von Testpersonen zur Ermittlung der Sprachqualität (MOS). Dieses Verfahren ist für die kontinuierliche Anwendung in realen Installationen bereits vom Ansatz her ungeeignet und höchst personalaufwendig.

Somit kann festgestellt werden, daß zwar Verfahren zur Bestimmung der Sprachqualität verfügbar sind, jedoch keines davon die oben genannten Anforderungen erfüllt.

Der Erfindung liegt daher die Aufgabe zugrunde, ein einfach und kostengünstig im VoIP-Routinebetrieb einsetzbares Verfahren zur Prüfung der Sprachübertragungsqualität sowie eine zur Durchführung dieses Verfahrens geeignete Anordnung anzugeben.

Diese Aufgabe wird gemäß ihrem Verfahrensaspekt durch ein Verfahren mit den Merkmalen des Anspruchs 1 und nach ihrem Anordnungsaspekt durch eine Anordnung mit den Merkmalen des Anspruchs 15 gelöst.

Die Erfindung basiert auf experimentellen Ergebnissen. Laboruntersuchungen haben ergeben, daß bei einer ungestörten bidirektionalen Sprachkommunikation zwischen zwei VoIP-Endpoints gemäß ITU-T Recommendation H.323 (H.323-Terminal, -Gateway, oder -MCU), hier zwischen zwei Stationen 1 und 2 in einem Voice over IP-System über einen hinreichend großen Zeitraum immer gleich viele RTP(Real-Time Transport Protocol)-Sprachpakete in beide Richtungen (von 1 nach 2 und von 2 nach 1) übertragen werden (Gleichgewicht). Verschlechtern sich die Übertragungsbedingungen für Voice over IP aus irgendeinem Grunde, wird auch das Gleichgewicht der Anzahl bidirektional übertragener RTP-Sprachpakete nachweislich gestört. Hierbei ist eine gleitende Veränderung zu verzeichnen. Eine Verschlechterung der Sprachqualität ist meßtechnisch über die Abweichung vom oben erwähnten Gleichgewicht bidirektionaler RTP-Sprachpakete bereits nachweisbar, bevor die Qualitätseinbuße durch den Benutzer subjektiv überhaupt wahrgenommen werden kann.

Es wird daher vorgeschlagen, das Gleich- bzw. Ungleichgewicht bidirektional übertragener RTP-Sprachpakete als Kriterium zur automatischen Ermittlung der Voice over IP-Sprachqualität heranzuziehen.

Verfahrensbedingt (CMSA/CD) kann die streng alternierende Folge bidirektional gesendeter RTP-Pakete auch bei guter Sprachqualität durch unregelmäßig gesendete unidirektionale n-fache RTP-Sequenzen (n > 1; typische Werte liegen zwischen 2 = n = 4), die wiederum in beiden Kommunikationsrichtungen sporadisch zu verzeichnen sind, unterbrochen sein. Weiterhin kann eine leichte Diskontinuität (unidirektionale n-fache RTP-Sequenzen mit n > 1) auch durch die zyklisch gesendeten RTCP-Pakete (RTCP = Real-Time Transport Control Protocol) hervorgerufen werden.

Damit diese Effekte die automatische Ermittlung der Sprachqualität nicht überlagern, sollte ein hinreichend dimensioniertes Meßintervall von mindestens 5 Sekunden, bevorzugt im Bereich zwischen 10 und 30 Sekunden, eingehalten werden. Hierbei entspricht ein Meßintervall von 10 Sekunden ca. 635 bidirektionalen RTP-Paketen bei einer Übertragungsrate von 10 Mbit/s. Diese Zeiträume sind auf einen 10 Mbit/s-Übertragungskanal bezogen. Bei höheren Übertragungsgeschwindigkeiten gelten andere Werte für die Zeiträume. Der vorgeschlagene Qualitätsbestimmungsprozeß liefert somit quasikontinuierlich, nahezu in Echtzeit, Ergebnisse.

Der schlagende Vorteil der Erfindung liegt in der Einfachheit des Verfahrens. Die Zählung von Paketen als meßtechnischer Schritt zur Bestimmung der Erfüllung "RTP-Gleichgewichtsbedingung" erfordert keine aufwendigen, rechenintensiven Algorithmen, wie sie z. B. für den Nachweis fehlender Isochronität von RTP-Sprachpaketen (Jitter) an Hand der Standardverteilung, welche ein weiteres Kriterium darstellt, erforderlich wären.

Stattdessen schließt in einer bevorzugten Ausführung die arithmetische Verarbeitung der erfaßten Zahlenwerte der in beiden Richtungen transportierten RTP-Sprachpakete eine einfache Quotientenbildung bzw. Differenzbildung ein. Hierbei steht der Wert 1 des Quotienten bzw. der Wert 0 der Differenz für höchste Sprachqualität bzw. störungsfreie Übertragung, und wesentliche Abweichungen von diesen Werten signalisieren Übertragungsstörungen.

Zudem kann die o. g. Paketzählung aus Sicht eines Schichtenmodells sehr weit unten im Kommunikationsstack (RTP) implementiert werden.

Zur Unterdrückung von Störeffekten (unidirektionale n-fache RTP-Sequenzen mit n > 1) werden einstellbare Schwellwerte für die Abweichung vom RTP-Gleichgewicht empfohlen. Dem entspricht eine Schwellwertdiskriminierung bezüglich des bei der arithmetischen Verarbeitung der Paketzahlen erhaltenen, grundsätzlich die Übertragungsqualität repräsentierenden Wertes. Hierbei wird ein zulässiger Toleranzbereich beispielsweise um den Wert 1 bei einer Quotientenbildung bzw. um den Wert 0 bei einer Differenzbildung bestimmt, und nur außerhalb des Toleranzbereiches liegende Werte gelten als Indiz für eine verschlechterte Übertragungsqualität.

Aus dem Ergebnis der Verarbeitung der Paket-Zählwerte können dann optional folgende Informationen generiert werden:
- 1) Codec-Informationen für adaptive Systeme zum automatischen Wechsel der Kompressionsrate bzw. Bandbreite und/oder Informationen zur Anzeige der Sprachqualität. Neben der Kompressionsrate bzw. Bandbreite können gegebenenfalls weitere Parameter von Schnittstellen bzw. Einstellungen des Übertragungsprotokolls bzw. Browsers in Abhängigkeit von dem die Übertragungsqualität repräsentierenden Wert eingestellt werden. Die Sprachqualität kann den Teilnehmern an ihrem jeweiligen Endgerät und/oder Wartungspersonal des Systems angezeigt werden.
- 2) Routing-Informationen für adaptive Systeme zur automatischen Wahl alternativer Routen z. B. in Gateways
- 3) Logging-Informationen zum Protokollieren der Sprachqualität. Diese Logginginformation kann - zum Zwecke der späteren Verwendung - entweder lokal auf den Endpoints und/oder auf einer zentralen Komponente gespeichert werden.

Eine zweckmäßige Anordnung zur Durchführung des vorgeschlagenen Verfahrens mit den oben genannten Aspekten umfaßt Hard- und/oder Softwarekomponenten zur Realisierung dieser Aspekte, die hier nicht im einzelnen aufgezählt werden. Dazu wird auf die Unteransprüche sowie die Beschreibung eines Ausführungsbeispiels weiter unten verwiesen.

Von den Figuren zeigen:
Fig. 1 eine schematische Darstellung zur Erläuterung der Erfindung in einer bevorzugten Ausführung,
Fig. 2a bis 2c grafische Darstellungen zur Erläuterung der nachrichtentechnischen Grundlage der Erfindung und
Fig. 3 ein Funktions-Blockschaltbild einer bevorzugten Anordnung zur Prüfung der Übertragungsqualität in einem VoIP-System.

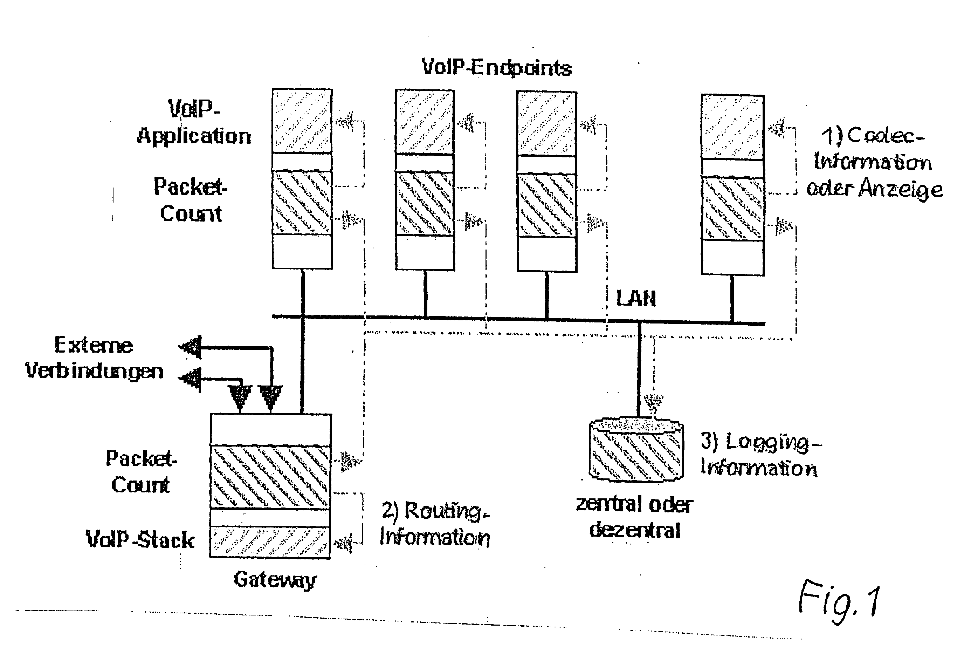

In Fig. 1 sind Prinzip und Anwendungen der vorgeschlagenen Lösung in einem IP-Netz (hier LAN) schematisch skizziert, an das eine Mehrzahl von VoIP-Endpoints angeschlossen ist und welches selbst über einen Gateway an externe Verbindungen angeschlossen ist. Die Figur soll verdeutlichen, daß im Rahmen eines Vorganges Packet-Count der Paketzählung und einer arithmetischen Verarbeitung gewonnene, die Sprachübertragungsqualität kennzeichnende Werte zum einen als Codec-Information zur Steuerung der Übertragungskenngrößen genutzt bzw. an den Endgeräten zur Anzeige gebracht werden können, zum anderen im Gateway-Server als Routing-Information für ein geeignetes Routing der Sprachverbindungen genutzt werden können und schließlich - zentral oder dezentral - im Sinne einer Logging-Information zur Protokollierung der Sprachqualität genutzt werden können.

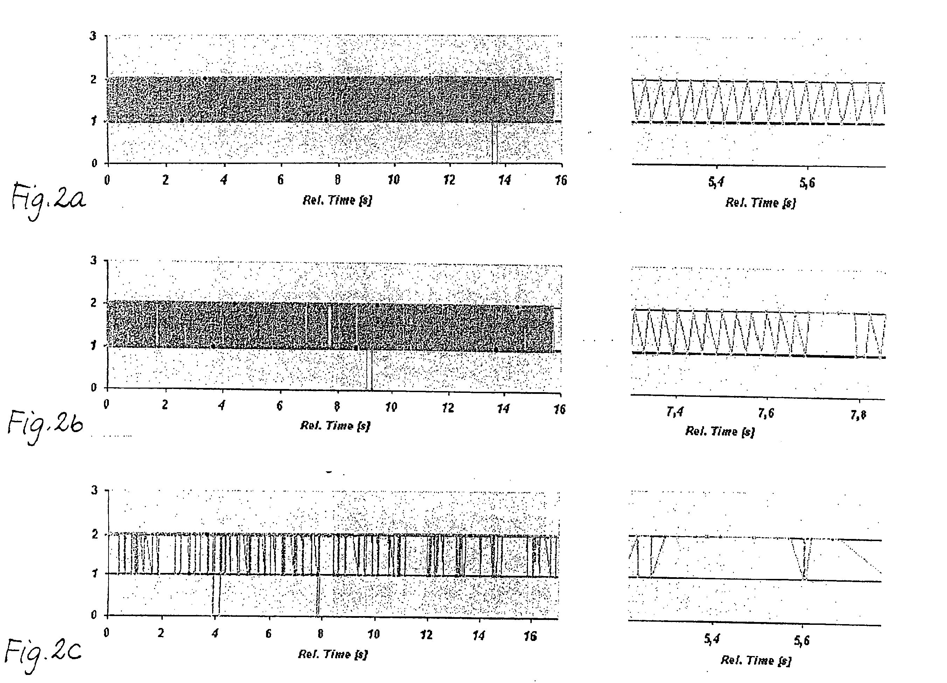

In Fig. 2a bis 2c sind drei verschiedene sogenannte Kommunikationsmuster einer VoIP-Sprachkommunikation gezeigt, die durch Verbindung von zwischen zwei VoIP-Endpoints (Stationen 1 und 2) ausgetauschten RTP-Paketen in der Reihenfolge ihres Auftretens gebildet sind. Es ist jeweils eine Folge von 1000 bidirektionalen RTP-Paketen bei 10 Mbit/s (entsprechend ca. 15,8 s Gesprächsdauer) dargestellt. Die dunkel markierten Pakete sind RTCP(Real-Time Control Protocol)-Pakete, die für die Paketzählung nicht zu berücksichtigen sind. Dies gilt auch für an andere Endpunkte gesendete Pakete (in Fig. 2a das auf der Zeitachse bei ca. t = 13,5 s von Station 1 an die Station 0 gesendete Paket).

Die in Fig. 2a dargestellte ungestörte Sprachkommunikation zwischen den Stationen 1 und 2 zeigt eine streng alternierende Folge von RTP-Paketen, die als praktisch kontinuierlich durchgehendes, abszissenparalleles Band zwischen den die Stationen 1 und 2 repräsentierenden Ordinatenpunkten 1 und 2 erscheint. Es gibt lediglich beim Zeitpunkt t = 6 s eine geringfügige, sporadische Diskontinuität. Die Zoomdarstellung auf der rechten Seite von Fig. 2a läßt die Struktur des waagerechten "Bandes" genauer erkennen.

Fig. 2b zeigt einen Zustand des VoIP-Systems mit etwas verschlechterten Übertragungsbedingungen, die sich durch das gehäufte Auftreten sporadischer Diskontinuitäten (unidirektionaler n-facher Sequenzen mit n > 1; vgl. insbesondere die Zoomdarstellung auf der rechten Seite von Fig. 2b) manifestieren. In diesem Zustand des Systems ist allerdings für den Benutzer subjektiv noch keine Beeinträchtigung der Sprachqualität wahrnehmbar.

Fig. 2c schließlich zeigt einen Systemzustand mit hörbar verschlechterter Sprachqualität, in dem sich meßtechnisch signifikante Störungen des "Gleichgewichts" der in beide Richtungen übertragenen Zahlen von RTP-Paketen zeigen. Insbesondere die Zoomdarstellung zeigt - in einem kleinen Zeitausschnitt - relativ langanhaltende Störungen des Gleichgewichtes zwischen den Übertragungen von RTP-Paketen in beide Richtungen.

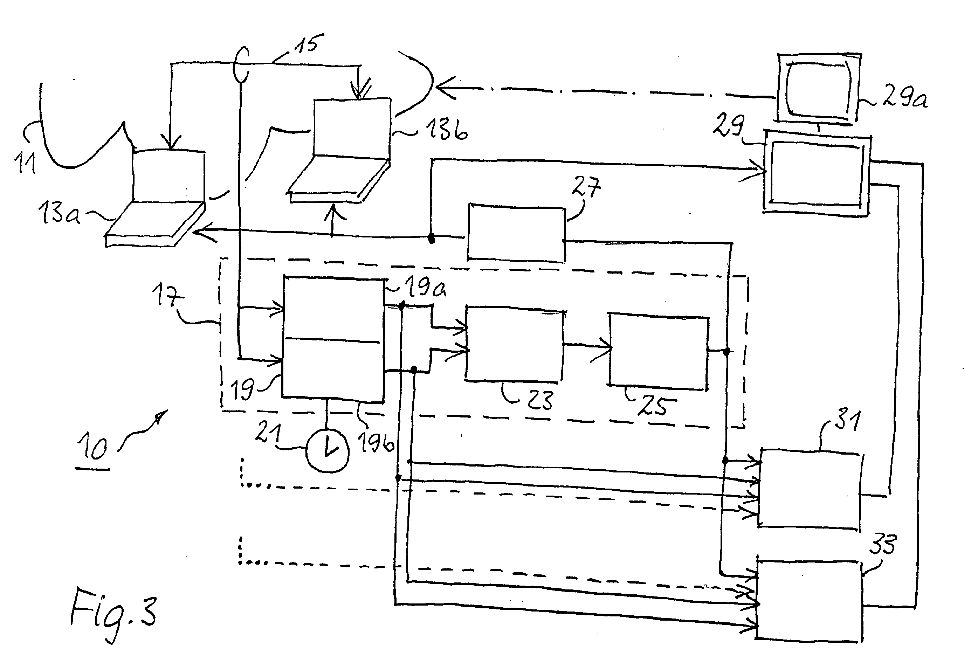

In Fig. 3 ist (zur Ergänzung der Darstellung in Fig. 1) der Aufbau einer bevorzugten Prüf- und Steueranordnung zur Durchführung des vorgeschlagenen Verfahrens in Gestalt eines Funktions-Blockschaltbildes genauer gezeigt. Die Qualität einer bidirektionalen Sprachübertragung zwischen zwei an das IP-Netz 11 (lokales Netz, Intranet, Extranet, Internet, etc.) angeschlossenen VoIP-Endpoints 13a, 13b als VoIP-Endgeräten auf einem Übertragungskanal 15 wird durch eine Prüfanordnung 17 bestimmt.

Diese umfaßt eine mit dem Übertragungskanal 15 gekoppelte Paketzählereinheit 19 mit zwei Zählerabschnitten 19a, 19b zur Zählung der vom VoIP-Endpoint 13a zum PC 13b bzw. umgekehrt übertragenen RTP-Pakete. Der Paketzählereinheit 19 ist ein Zeitgeber 21 zugeordnet, der einen hinreichend großen Zählzeitraum festlegt und ein Auslesen der Zählerstände nach dessen Verstreichen bewirkt. Die Zählerstände werden in eine arithmetische Verarbeitungseinheit 23 ausgelesen, die insbesondere eine Divisions- oder Subtraktionsstufe umfaßt und aus den Paketzählwerten einen Quotienten oder eine Differenz bildet. Mit dem Ausgang der arithmetischen Verarbeitungseinheit 23 ist ein Schwellwertdiskriminator 25 verbunden, der das Berechnungsergebnis einer Schwellwertdiskriminierung mit einem vorbestimmten (programmierbaren) Toleranzbetrag unterzieht.

Der den Ausgang der Prüfanordnung 17 bildenden Ausgang des Schwellwertdiskriminators 25 ist einerseits mit einer Signalisierungseinheit 27 verbunden, welche den aus den Paketzahlen berechneten, die Qualität der Sprachübertragung kennzeichnenden Wert dann weiter signalisiert, wenn dieser außerhalb des vorbestimmten Toleranzbereiches liegt. Die Signalisierung erfolgt einerseits gegenüber den Teilnehmern der Sprachkommunikation auf deren VoIP-Endpoints 13a, 13b und andererseits gegenüber einer Betriebssteuereinheit 29 des VoIP-Systems. Dort ist insbesondere die Anzeige auf einem Monitor 29a vorgesehen.

Weiterhin ist der Ausgang der Prüfanordnung 17 - parallel zu den Ausgängen der Zählerabschnitte 19a, 19b der Paketzählereinheit 19 einerseits mit verschiedenen Eingängen einer Protokollierungs-Speichereinrichtung 31 und andererseits mit Eingängen einer statistischen Verarbeitungseinheit 33 verbunden. Die Ausgänge der letztgenannten Einrichtungen sind, unabhängig vom Ausgang der Prüfanordnung 17 bzw. Signalisierungsstufe 27 mit Eingängen der Betriebssteuereinheit 29 verbunden.

Mit dieser Gesamtanordnung wird also in dem oben bereits erläuterten Sinne neben der aktuellen Beurteilung der Sprachqualität einer konkreten Verbindung in Echtzeit bzw. Quasi-Echtzeit unter Einbeziehung der aus weiteren Verbindungen gewonnenen Informationen eine Protokollierung der Sprachqualität des VoIP-Systems über einen längeren Zeitraum sowie eine statistische Auswertung ausgeführt. Die Ergebnisse der Protokollierung und statistischen Auswertung werden neben dem aktuellen Prüfwert zur Systemsteuerung (Parametereinstellung und Routing) herangezogen. Somit läßt sich also die Qualität einer Voice over IP-Übertragung nicht nur in einfacher und kostengünstiger Weise in Echtzeit überwachen, sondern auch anhand der Meßergebnisse durch geeignete Steuereingriffe schnell und flexibel beeinflussen.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen.

## Patentansprüche

1. Verfahren zur Prüfung der Übertragungsqualität einer bidirektionalen realen Sprachübertragung oder Multicastverbindung über ein IP-Netz (11) zwischen einem ersten VoIP-Endpoint (13a) und einem zweiten VoIP-Endpoint (13b),
**dadurch gekennzeichnet, dass**
an einer Erfassungsstelle am Übertragungskanal zwischen dem ersten und dem zweiten VoIP-Endpoint über einen vorbestimmten, hinreichend großen Zeitraum eine erste Zahl der in Richtung zu dem zweiten VoIP-Endpoint übertragenen RTP-Sprachpakete und eine zweite Zahl der in Richtung zu dem ersten VoIP-Endpoint übertragenen RTP-Sprachpakete erfasst wird und die erste und zweite Zahl einer arithmetischen Verarbeitung unterzogen werden, in deren Ergebnis ein die Übertragungsqualität repräsentierender Wert erhalten wird.

2. Verfahren nach Anspruch 1,
**dadurch gekennzeichnet, dass**
der vorbestimmte Zeitraum für einen 10 Mbit/s-Übertragungskanal länger als 5 s ist und bevorzugt im Bereich zwischen 10 und 30 s liegt.

3. Verfahren nach Anspruch 1 oder 2,
**dadurch gekennzeichnet, dass**
die arithmetische Verarbeitung eine Quotientenbildung einschließt, wobei der Wert 1 des Quotienten höchste Übertragungsqualität repräsentiert.

4. Verfahren nach Anspruch 1 oder 2,
**dadurch gekennzeichnet, dass**
die arithmetische Verarbeitung eine Differenzbildung einschließt, wobei der Wert 0 für die Differenz höchste Übertragungsqualität repräsentiert.

5. Verfahren nach einem der vorangehenden Ansprüche,
**dadurch gekennzeichnet, dass**
der die Übertragungsqualität repräsentierende Wert einer Schwellwertdiskriminierung zur Unterdrückung von Nebeneffekten, insbesondere aus der Eigenart des Übertragungsprotokolls herrührenden Effekten, unterzogen wird.

6. Verfahren nach Anspruch 3 oder 5,
**dadurch gekennzeichnet, dass**
nur außerhalb eines vorbestimmten Toleranzbereiches um den Wert 1 liegende Quotienten als Repräsentation einer verminderten Übertragungsqualität gelten.

7. Verfahren nach Anspruch 4 und 5,
**dadurch gekennzeichnet, dass**
nur außerhalb eines vorbestimmten Toleranzbereiches um den Wert 0 liegende Differenzwerte als Repräsentation einer verminderten Übertragungsqualität gelten.

8. Verfahren nach einem der vorangehenden Ansprüche,
**dadurch gekennzeichnet, dass**
die erfassten ersten und zweiten Zahlen und/oder die berechneten Werte, insbesondere für eine Mehrzahl an das IP-Netz angeschlossener erster und zweiter VoIP-Endpoints, zwischen denen jeweils bidirektionale Sprachverbindungen bestehen, protokolliert werden.

9. Verfahren nach einem der vorangehenden Ansprüche,
**dadurch gekennzeichnet, dass**
die erfassten ersten und zweiten Zahlen und/oder die berechneten Werte, insbesondere für eine Mehrzahl an das IP-Netz angeschlossener erster und zweiter VoIP-Endpoints, zwischen denen jeweils bidirektionale Sprachverbindungen bestehen, einer zusammenfassenden statistischen Verarbeitung zur Gewinnung eines die Gesamt-Übertragungsqualität des IP-Netzes oder eines Abschnittes desselben repräsentierenden Gesamt-Wertes unterzogen werden.

10. Verfahren nach einem der vorangehenden Ansprüche,
**dadurch gekennzeichnet, dass**
der die Übertragungsqualität repräsentierende Wert den Teilnehmern am ersten und/oder zweiten VoIP-Endpoint (13a, 13b) und/oder einer Betriebssteuerzentrale (29) des IP-Netzes (11) signalisiert wird.

11. Verfahren nach einem der vorangehenden Ansprüche,
**dadurch gekennzeichnet, dass**
der die Übertragungsqualität repräsentierende Wert als Eingangsgröße für eine Steuerung der Sprachübertragung über das IP-Netz genutzt wird.

12. Verfahren nach einem der vorangehenden Ansprüche,
**dadurch gekennzeichnet, dass**
der die Übertragungsqualität repräsentierende Wert im wesentlichen in Echtzeit bestimmt und insbesondere auch signalisiert oder als Eingangsgröße für eine Steuerung der Sprachübertragung genutzt wird.

13. Anordnung zur Durchführung des Verfahrens nach einem der vorangehenden Ansprüche,
**gekennzeichnet durch**
an einer Erfassungsstelle am Übertragungskanal zwischen dem ersten und dem zweiten VoIP-Endpoint angeordnete Erfassungsmittel (19) zur Erfassung der ersten Zahl der in Richtung zu dem zweiten VoIP-Endpoint (13b) und der zweiten Zahl der in Richtung zu dem ersten VoIP-Endpoint (13a) übertragenen RTP-Sprachpakete und
eine mit den Erfassungsmitteln eingangsseitig verbundene arithmetische Verarbeitungseinheit (23) zur Berechnung des die Übertragungsqualität repräsentierenden Wertes aus der ersten und zweiten Zahl.

14. Anordnung nach Anspruch 13,
**dadurch gekennzeichnet, dass**
die arithmetische Verarbeitungseinheit (23) eine Divisions- oder Substraktionsstufe aufweist.

15. Anordnung nach Anspruch 13 oder 14,
**dadurch gekennzeichnet, dass**
der arithemtischen Verarbeitungseinheit (23) ein Schwellwertdiskriminator (25) zur Bewertung des die Übertragungsqualität repräsentierenden Wertes anhand mindestens eines vorbestimmten Schwellwertes nachgeschaltet ist.

16. Anordnung nach einem der Ansprüche 13 bis 15,
**gekennzeichnet durch**
eine eingangsseitig mit dem Ausgang der Erfassungseinrichtung (19) und/oder der arithmetischen Verarbeitungseinheit (23) verbundene Speichereinrichtung (31) zur Protokollierung der ersten und zweiten Zahlen und/oder der berechneten Werte.

17. Anordnung nach einem der Ansprüche 13 bis 16,
**gekennzeichnet durch**
eine eingangsseitig mit dem Ausgang der Erfassungseinrichtung (19) und/oder der arithmetischen Verarbeitungseinheit (23) verbundene statistische Verarbeitungseinheit (33) zur zusammenfassenden statistischen Verarbeitung der erfassten Zahlen bzw. berechneten Werte zur Bewertung der Gesamt-Übertragungsqualität des IP-Netzes oder eines Abschnittes desselben.

18. Anordnung nach einem der Ansprüche 13 bis 17,
**gekennzeichnet durch**
Signalisierungsmittel (27) zur Signalisierung des berechneten Wertes bzw. des Gesamtwertes an die Teilnehmer am ersten und/oder zweiten VoIP-Endpoint (13a, 13b) und/oder an eine Betriebssteuerzentrale (29) des IP-Netzes (11).

## Claims

1. Method for testing the transmission quality of a bidirectional real speech transmission or multicast connection over an IP network (11) between a first VoIP endpoint (13a) and a second VoIP endpoint (13b), **characterized in that** a first number of the RTP speech packets transmitted in the direction of the second VoIP endpoint, and a second number of the RTP speech packets transmitted in the direction of the first VoIP endpoint are detected at a detection point on the transmission channel between the first and the second VoIP endpoint over a predetermined, sufficiently long time period, and the first and second numbers are subjected to arithmetic processing, as a result of which a value representing the transmission quality is obtained.

2. Method according to Claim 1, **characterized in that** the predetermined time period for a 10 Mbit/s transmission channel is longer that 5 s, and is preferably in the range of between 10 and 30 s.

3. Method according to Claim 1 or 2, **characterized in that** the arithmetic processing includes a division, the value 1 of the quotient representing the highest transmission quality.

4. Method according to Claim 1 or 2, **characterized in that** the arithmetic processing includes a subtraction, the value 0 for the difference representing the highest transmission quality.

5. Method according to one of the preceding claims, **characterized in that** the value representing the transmission quality is subjected to a threshold value discrimination in order to suppress side effects, in particular effects due to the characteristic features of the communication protocol.

6. Method according to Claim 3 or 5, **characterized in that** only quotients outside a predetermined tolerance range around the value 1 are valid as a representation of a reduced transmission quality.

7. Method according to Claims 4 and 5, **characterized in that** only difference values outside a predetermined tolerance range around the value 0 are valid as a representation of a reduced transmission quality.

8. Method according to one of the preceding claims, **characterized in that** the detected first and second numbers and/or the calculated values, in particular for a plurality of first and second VoIP endpoints connected to the IP network between which bidirectional speech connections exist in each case are logged.

9. Method according to one of the preceding claims, **characterized in that** the detected first and second numbers and/or the calculated values, in particular for a plurality of first and second VoIP endpoints connected to the IP network within which bidirectional speech connections exist in each case are subjected to summarizing statistical processing in order to obtain an overall value representing the overall transmission quality of the IP network or of a section of the same.

10. Method according to one of the preceding claims, **characterized in that** the value representing the transmission quality is signalled to the subscribers at the first and/or second VoIP endpoints (13a, 13b) and/or to an operation control centre (29) of the IP network (11).

11. Method according to one of the preceding claims, **characterized in that** the value representing the transmission quality is used as input variable for controlling the speech transmission over the IP network.

12. Method according to one of the preceding claims, **characterized in that** the value representing the transmission quality is determined substantially in real time and, in particular, also signalled, or is used as input variable for controlling the speech transmission.

13. Arrangement for carrying out the method according to one of the preceding claims, **characterized by** detecting means (19), arranged at a detection point on the transmission channel between the first and the second VoIP endpoints, for detecting the first number of the RTP speech packets transmitted in the direction of the second VoIP endpoint (13b), and for detecting the second number of the RTP speech packets transmitted in the direction of the first VoIP endpoint (13a), and
an arithmetic processing unit (23) connected on the input side to the detecting means for calculating the value representing the transmission quality from the first and second numbers.

14. Arrangement according to Claim 13, **characterized in that** the arithmetic processing unit (23) has a division or subtraction stage.

15. Arrangement according to Claim 13 or 14, **characterized in that** connected downstream of the arithmetic processing unit (23) is a threshold value discriminator (25) for evaluating the value representing the transmission quality with the aid of at least one predetermined threshold value.

16. Arrangement according to one of Claims 13 to 15, **characterized by** a storage device (31) connected on the input side to the output of the detecting device (19) and/or of the arithmetic processing unit (23), for the purpose of logging the first and second numbers and/or the calculated values.

17. Arrangement according to one of Claims 13 to 16, **characterized by** a statistical processing unit (33), connected on the input side to the output of the detecting device (19) and/or of the arithmetic processing unit (23), for summarizing statistical processing of the detected numbers or calculated values in order to evaluate the overall transmission quality of the IP network or of a section of the same.

18. Arrangement according to one of Claims 13 to 17, **characterized by** signalling means (27) for signalling the calculated value or the overall value to the subscribers at the first and/or second VoIP endpoint (13a, 13b) and/or to an operation control centre (29) of the IP network (11).

## Revendications

1. Procédé de test de la qualité de transmission d'une transmission de paroles réelle bidirectionnelle ou d'une liaison de multidiffusion par l'intermédiaire d'un réseau IP (11) entre un premier point terminal VoIP (13a) et un deuxième point terminal VoIP (13b),
**caractérisé par le fait que**, en un point de détection sur le canal de transmission entre le premier et le deuxième point terminal VoIP, on détecte sur un intervalle de temps prescrit et suffisamment grand un premier nombre des paquets vocaux RTP transmis en direction du deuxième point terminal VoIP et un deuxième nombre des paquets vocaux RTP transmis en direction du premier point terminal VoIP et on soumet le premier et le deuxième nombre à un traitement arithmétique dont le résultat contient une valeur représentant la qualité de transmission.

2. Procédé selon la revendication 1,
**caractérisé par le fait que** l'intervalle de temps prescrit pour un canal de transmission à 10 Mbit/s est supérieur à 5 s et est compris de préférence entre 10 et 30 s.

3. Procédé selon la revendication 1 ou 2,
**caractérisé par le fait que** le traitement arithmétique inclut un calcul de quotient, la valeur 1 du quotient représentant la qualité de transmission maximale.

4. Procédé selon la revendication 1 ou 2,
**caractérisé par le fait que** le traitement arithmétique inclut un calcul de différence, la valeur 0 pour la différence représentant la qualité de transmission maximale.

5. Procédé selon l'une des revendications précédentes,
**caractérisé par le fait que** la valeur représentant la qualité de transmission est soumise à une discrimination par valeur de seuil pour supprimer des effets secondaires, notamment des effets dus à la nature du protocole de transmission.

6. Procédé selon la revendication 3 ou 5,
**caractérisé par le fait que** seuls des quotients se trouvant en dehors d'une plage de tolérance prédéterminée autour de la valeur 1 sont considérés comme représentant une qualité de transmission réduite.

7. Procédé selon les revendications 4 et 5,
**caractérisé par le fait que** seules des valeurs de différence se trouvant en dehors d'une plage de tolérance prédéterminée autour de la valeur 0 sont considérées comme représentant une qualité de transmission réduite.

8. Procédé selon l'une des revendications précédentes,
**caractérisé par le fait que** l'on consigne les premiers et deuxièmes nombres détectés et/ou les valeurs calculées, notamment pour une multiplicité de premiers et deuxièmes points terminaux VoIP qui sont raccordés au réseau IP et entre lesquels il existe à chaque fois des liaisons vocales bidirectionnelles.

9. Procédé selon l'une des revendications précédentes,
**caractérisé par le fait que** l'on soumet les premiers et deuxièmes nombres détectés et/ou les valeurs calculées, notamment pour une multiplicité de premiers et deuxièmes points terminaux VoIP qui sont raccordés au réseau IP et entre lesquels il existe à chaque fois des liaisons vocales bidirectionnelles, à un traitement statistique récapitulatif pour obtenir une valeur globale représentant la qualité de transmission globale du réseau IP ou d'un tronçon de celui-ci.

10. Procédé selon l'une des revendications précédentes,
**caractérisé par le fait que** la valeur représentant la qualité de transmission est signalée aux abonnés sur le premier et/ou deuxième point terminal VoIP (13a, 13b) et/ou à un central de commande d'exploitation (29) du réseau IP (11).

11. Procédé selon l'une des revendications précédentes,
**caractérisé par le fait que** la valeur représentant la qualité de transmission est utilisée comme grandeur d'entrée pour une commande de la transmission de paroles par l'intermédiaire du réseau IP.

12. Procédé selon l'une des revendications précédentes,
**caractérisé par le fait que** la valeur représentant la qualité de transmission est déterminée globalement en temps réel et, en particulier, est aussi signalée ou utilisée comme grandeur d'entrée pour une commande de la transmission de paroles.

13. Dispositif pour la mise en oeuvre du procédé selon l'une des revendications précédentes,
**caractérisé par**
des moyens de détection (19) placés en un point de détection sur le canal de transmission entre le premier et le deuxième point terminal VoIP pour la détection du premier nombre des paquets vocaux RTP transmis en direction du deuxième point terminal VoIP (13b) et du deuxième nombre des paquets vocaux RTP transmis en direction du premier point terminal VoIP (13a), et
une unité de traitement arithmétique (23) reliée en entrée aux moyens de détection pour le calcul de la valeur représentant la qualité de transmission à partir du premier et du deuxième nombre.

14. Dispositif selon la revendication 13,
**caractérisé par le fait que** l'unité de traitement arithmétique (23) comporte un étage de division ou un étage de soustraction.

15. Dispositif selon la revendication 13 ou 14,
**caractérisé par le fait que** l'unité de traitement arithmétique (23) comporte un discriminateur par valeur de seuil (25) pour évaluer la valeur représentant la qualité de transmission à l'aide d'au moins une valeur de seuil prédéterminée.

16. Dispositif selon l'une des revendications 13 à 15,
**caractérisé par** un dispositif de mémorisation (31) relié en entrée à la sortie du dispositif de détection (19) et/ou de l'unité de traitement arithmétique (23) pour consigner les premiers et deuxièmes nombres et/ou les valeurs calculées.

17. Dispositif selon l'une des revendications 13 à 16,
**caractérisé par** une unité de traitement statistique (33) reliée en entrée à la sortie du dispositif de détection (19) et/ou de l'unité de traitement arithmétique (23) pour effectuer un traitement statistique récapitulatif des nombres détectés et/ou des valeurs calculées pour l'évaluation de la qualité de transmission globale du réseau IP ou d'un tronçon de celui-ci.

18. Dispositif selon l'une des revendications 13 à 17,
**caractérisé par** des moyens de signalisation (27) pour la signalisation de la valeur calculée ou de la valeur globale aux abonnés sur le premier et/ou deuxième point terminal VoIP (13a, 13b) et/ou à un central de commande d'exploitation (29) du réseau IP (11).
